Europäisches Patentamt

European Patent Office

Office européen des brevets

(19)

(11) **EP 0 962 149 B1**

(12) **FASCICULE DE BREVET EUROPEEN**

(45) Date de publication et mention
de la délivrance du brevet:
**24.04.2002 Bulletin 2002/17**

(51) Int Cl.⁷: **A23B 4/023**

(21) Numéro de dépôt: **98401278.1**

(22) Date de dépôt: **28.05.1998**

(54) **Procédé de préparation de produits carnés cuits et produits carnés cuits ainsi obtenus**

Verfahren zur Herstellung eines gekochten Fleischprodukts und entsprechendes Fleischprodukt

Sole Process for preparation of cooked meat products and so prepared meat products

(84) Etats contractants désignés:
**AT BE DE DK ES FR GB IT NL**

(43) Date de publication de la demande:
**08.12.1999 Bulletin 1999/49**

(73) Titulaire: **Rollier, Claude**
**75015 Paris (FR)**

(72) Inventeur: **Rollier, Claude**
**75015 Paris (FR)**

(74) Mandataire: **Nargolwalla, Cyra et al**
**Cabinet Plasseraud**
**84, rue d'Amsterdam**
**75440 Paris Cedex 09 (FR)**

(56) Documents cités:
**WO-A-92/16110          FR-A- 1 466 690**
**FR-A- 2 071 310          FR-A- 2 634 976**
**FR-A- 2 664 794**

- **PATENT ABSTRACTS OF JAPAN vol. 11, no. 75
  (C-408), 6 mars 1987 & JP 61 231941 A (A
  TAKESHI), 16 octobre 1986,**
- **PATENT ABSTRACTS OF JAPAN vol. 11, no. 132
  (C-417), 24 avril 1987 & JP 61 268156 A (F.
  RYUTARO ET AL.)**
- **DATABASE WPI Week 9802 Derwent
  Publications Ltd., London, GB; AN 98-009305
  XP002082106 & CN 1 132 029 A (WANG Y ET AL.)
  , 2 octobre 1996**

- **PATENT ABSTRACTS OF JAPAN vol. 18, no. 523
  (C-1256), 4 octobre 1994 & JP 06 181679 A (U.
  MINORU ET AL.), 5 juillet 1994,**
- **DATABASE WPI Week 9726 Derwent
  Publications Ltd., London, GB; AN 97-284071
  XP002082107 & JP 09 103 236 A (SUIKEN YG) ,
  22 avril 1997**
- **INTRODUCTION A LA BIOCHIMIE ET A LA
  TECHNOLOGIE DES ALIMENTS, CHEFTEL JC &
  H, 1980, TECHNIQUE ET DOCUMENTATION -
  ENTREPRISE MODERNE D'EDITION, PARIS, p.
  73,83-87, 290-294**
- **CD RÖMPP CHEMIE LEXIKON, VERSION 1.0,
  1995, GEORG THIEME VERLAG,
  STUTTGART/NEW-YORK**
- **Le Petit Larousse, paru aux éditions Larousse,
  version de 1998, p. 84**
- **Imprimé de la recette de dinde farcie, adresse
  Internet: http://antioche.lip6.fr/portier/0f0c.htlm,
  modifiée dernièrement le 03.07.1997**
- **Imprimé de la recette du coq au vin, adresse
  Internet:
  http://www.auvernet.com/bellard/coq.htm,
  modifiée dernièrement le 27.06.1997**
- **Imprimé de la recette de la choucroute
  alsacienne, adresse Internet:
  http://antioche.lip6.fr/portier/0f0a.htm, saisie le
  10.12.1996**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention a pour objet un procédé de préparation de produits carnés cuits présentant des qualités organoleptiques améliorées, ce procédé mettant en oeuvre une étape de saumurage.

La présente invention a également pour objet les produits carnés cuits ainsi obtenus, tels qu'ils sont définis dans la revendication 7.

Les demandes de brevet WO 92/16110 et FR 2634976 décrivent des procédés de salage (donc en milieu solide) sur des viandes non cuites. La demande de brevet JP 06 181 679 décrit un procédé de salage sur les viandes non cuites grâce à une liqueur contenant de l'alcool et du sel.

Dans le procédé de préparation des jambons cuits, il est nécessaire de mettre en oeuvre une étape de saumurage au cours de laquelle de la saumure, c'est-à-dire de l'eau additionnée de sel nitrité, d'antioxydants, d'agents conservateurs, de sucres et d'aromates, est injectée dans le jambon, ceci afin de permettre la conservation du jambon cuit.

Dans la saumure, l'eau est le vecteur qui permet de transférer notamment les aromates du milieu liquide au milieu solide que constitue le jambon. Cependant, il s'avère que la palette des aromates utilisables est limitée à ceux solubles dans l'eau et que leur transfert sur la viande n'est pas toujours satisfaisant.

Le Déposant a eu le mérite de trouver qu'il était possible d'améliorer davantage les qualités organoleptiques du jambon ou de tout autre produit carné cuit nécessitant un saumurage. Ainsi, il a trouvé que, de façon inattendue et surprenante, l'utilisation, à la place d'une saumure classique, d'une solution de saumurage dans laquelle la totalité ou une partie de l'eau est substituée par du vin ou par tout alcool de qualité alimentaire, améliorait de façon considérable les propriétés organoleptiques du produit carné cuit obtenu tout en maintenant sa coloration, ses propriétés de conservation et sa tenue à la coupe.

La présente invention a donc pour objet un procédé de préparation de produits carnés cuits mettant en oeuvre une étape de saumurage, selon lequel l'eau d'une saumure classique est substituée par de l'alcool de qualité alimentaire en des proportions allant de 10 à 100%, de préférence de 40 à 100% et plus préférentiellement encore de 75 à 100% et à laquelle on a notamment ajouté des agents conservateurs, des antioxydants, des sucres, des aromates, des polyphosphates et du sel de table nitrité.

Dans la présente description, on entend par "alcool de qualité alimentaire" les vins ou spiritueux et leurs mélanges, quelle que soit leur origine.

En fonction des qualités organoleptiques souhaitées pour le produit carné préparé, l'homme du métier choisira l'alccol qui convient le mieux. En particulier, le goût de l'alcool se transférant également à la viande, indépendamment et en plus des aromates qui ont été ajoutés à la solution de saumurage, l'homme du métier pourra tout à fait choisir l'alcool désiré en fonction du goût qu'il souhaite conférer au produit carné.

Le procédé conforme à l'invention peut être utilisé pour la préparation de produits carnés choisis dans le groupe comprenant notamment le jambon ou l'épaule de porc, le jambon de volailles, en particulier de dinde ou de poulet, les rôtis cuits de porc, de dinde, de dindonneau, etc.

Dans le procédé de préparation conforme à l'invention, l'étape de saumurage est réalisée, de façon classique, par immersion ou bien par injection au coeur du produit carné suivie d'un malaxage.

La solution de saumurage est injectée à raison de 80 à 200 g par kg de produit carné à préparer, de préférence de 100 à 180 g et plus préférentiellement encore de 120 à 160 g.

Selon un mode de réalisation préféré de l'invention, le procédé consiste en la réalisation des étapes suivantes:

- découpe et désossage des pièces de viande,
- injection sous pression d'une solution de saumurage à base d'alcool de qualité alimentaire, contenant notamment des agents conservateurs, des antioxydants, des sucres, des polyphosphates, des aromates, du sel de table nitrité et éventuellement de l'eau,
- poursuite de l'imprégnation de la solution de saumurage dans les pièces de viande par malaxage dans une baratte sous vide,
- mise en forme des pièces de viande dans des poches sous vide,
- cuisson et
- refroidissement.

Les conditions de réalisation de chaque étape seront aisément choisies par l'homme du métier. L'étape de cuisson peut être effectuée indifféremment avant ou après l'étape de mise en forme des pièces de viande. La cuisson est réalisée dans un four, de préférence un four à vapeur humide.

La solution de saumurage selon l'invention est un mélange qui est préparé à partir de l'alcool de qualité alimentaire auquel on ajoute notamment:

- des agents conservateurs,
- des antioxydants,
- des sucres,
- des aromates,
- des polyphosphates,
- du sel de table nitrité et
- éventuellement de l'eau.

Les agents conservateurs sont ceux classiquement utilisés et autorisés par la législation pour la conservation des viandes.

Les antioxydants sont choisis dans le groupe comprenant les antioxydants de qualité alimentaire et notamment l'acide ascorbique, ou ses sels.

Les sucres sont choisis dans le groupe comprenant notamment le glucose, le saccharose, la dextrine, ou leurs mélanges.

Les aromates sont choisis en fonction du goût final que l'homme du métier souhaite conférer au produit carné cuit.

Le sel de table nitrité utilisé dans cette solution de saumurage est, par exemple, un mélange de sel de table et de nitrite de sodium dans des proportions en poids respectives de 99,4:0,6.

On peut ajouter à cette solution de saumurage d'autres produits de qualité alimentaire utilisés dans les saumures, tels que notamment des nitrates, des agents stabilisants de texture tels que des gommes, et des fixateurs d'arômes tels que le glutamate, ou leurs mélanges.

L'invention a également pour objet des produits carnés cuits obtenue selon le procédé de l'invention et définis à la présente revendication 7. La quantité d'alcool contenue dans ces produits carnés cuits est fonction de la quantité d'alcool utilisée dans le procédé de préparation, elle est détectable par les méthodes usuelles de détection.

Les produits carnés cuits conformes à l'invention présentent des propriétés organoleptiques améliorées. En effet. non seulement le goût de l'alcool utilisé dans leur procédé de préparation est transféré aux produits carnés mais les aromates utilisés sont transférés aux produits carnés de façon plus marquée que lorsqu'on utilise une saumure classique.

L'invention va être décrite de façon plus détaillée à l'aide des exemples suivants qui ne sont pas limitatifs.

## EXEMPLES

Dans les exemples, les dénominations utilisées sont les suivantes :

- le sel de table nitrité utilisé est un mélange à 99,4: 0.6 en poids de sel de table et de nitrite de sodium,
- BO 10 est un mélange de sucres et d'aromates commercialisé par la Société JAEGER,
- Arôme noisette et Bouquet 400 sont les dénominations commerciales de mélanges d'aromates commercialisés par la Société JAEGER.

## EXEMPLE 1

**Préparation d'une solution de saumurage.**

On prépare une solution de saumurage en mélangeant les ingrédients suivants:

| Vin rouge à 11° | 89 g |
| --- | --- |

(suite)

| Sel de table nitrité | 17 g |
| --- | --- |
| BO 10 | 10 g |
| Ascorbate de sodium | 1 g |
| Polyphosphates de sodium | 1 g |
| Arôme noisette | 3 g |
| | 121 g |

## EXEMPLE 2

**Préparation d'une solution de saumurage.**

On prépare une solution de saumurage en mélangeant les ingrédients suivants:

| Vin rouge à 11° | 100 g |
| --- | --- |
| Sel de table nitrité | 16 g |
| BO 10 | 15 g |
| Glutamate de sodium | 10 g |
| Ascorbate de sodium | 1 g |
| Polyphosphates de sodium | 4 g |
| Extrait sec de vin rouge | 5 g |
| Bouquet 400 | 6 g |
| | 157 g |

## EXEMPLE 3

**Préparation de jambon de porc cuit à l'aide de la solution de saumurage préparée dans l'exemple 1.**

On découpe et on désosse un jambon de porc. Puis on injecte directement dans le jambon désossé, sous pression, avec des aiguilles creuses, 120 g de solution de saumurage préparée à l'exemple 1 ci-dessus par kg de jambon désossé.

On poursuit ensuite l'imprégnation de la solution de saumurage dans le jambon par un malaxage programmé dans une baratte sous vide à une température comprise entre 4 et 6°C pendant 14 heures à 18 heures. On vidange la baratte et l'on met sous vide les pièces de jambon dans des poches du type plastique, puis dans un moule pour qu'elles prennent forme. Les pièces de jambon mises en forme sont alors introduites dans un four de cuisson à vapeur humide avec une montée de la température par paliers jusqu'à une température d'ambiance de 60 à 68°C, puis jusqu'à une température à coeur de 60 à 68°C. La durée totale de cuisson est comprise entre 10 et 18 heures.

Les pièces de jambon sont ensuite retirées du four et placées pendant 14 à 24 heures dans un local à refroidissement rapide, dans lequel la température est comprise entre 2 et 6°C.

Les pièces de jambon cuit refroidies sont conservées dans un entrepôt réfrigéré à une tempérautre comprise entre 2 et 4°C.

La couleur du jambon ainsi préparé et sa tenue dans le temps sont identiques à celles d'un jambon préparé selon le procédé classique.

## EXEMPLE 4

**Préparation de jambon de porc cuit à l'aide de la solution de saumurage préparée dans l'exemple 2.**

On procède comme dans l'exemple 3, excepté le fait que l'on injecte 150 g de la solution de saumurage préparée à l'exemple 2 ci-dessus par kg de jambon à préparer.

La couleur du jambon ainsi préparé et sa tenue sont identiques à celles d'un jambon préparé selon le procédé classique.

Des tests réalisés en aveugle montrent que les jambons préparés selon le procédé conforme à l'invention sont nettement différenciables des jambons préparés classiquement de par leur goût plus marqué.

## Revendications

1. Procédé de préparation de produits carnés cuits mettant en oeuvre une étape de saumurage, **caractérisé par le fait que** l'eau de la saumure est substituée par de l'alcool de qualité alimentaire en des proportions allant de 10 à 100%, de préférence de 40 à 100% et plus préférentiellement encore de 75 à 100% et à laquelle on ajoute notamment :

   - des agents conservateurs,
   - des antioxydants,
   - des sucres,
   - des aromates,
   - des polyphosphates,
   - du sel de table nitrité.

2. Procédé selon la revendication 1, **caractérisé par** le tait que l'alcool est choisi dans le groupe comprenant les vins et spiritueux ou leurs mélanges.

3. Procédé selon l'une des revendications 1 ou 2, **caractérisé par** le tait que les produits carnés sont choisis dans le groupe comprenant notamment le jambon ou l'épaule de porc, le jambon de volailles, en particulier de dinde ou de poulet, les rôtis cuits de porc, de dinde ou dindonneau.

4. Procédé selon l'une quelconque des revendications 1 à 3, **caractérisé par** le tait que le saumurage est réalisé par immersion ou, de préférence, par injection suivie d'un malaxage.

5. Procédé selon l'une quelconque des revendications 1 à 4, **caractérisé par** le tait que la solution de saumurage est utilisée à raison de 80 à 100 g par kg de produit carné à préparer, de préférence de 100 à 180 g et plus préférentiellement encore de 120 à 160 g.

6. Procédé selon l'une quelconque des revendications 1 à 5, **caractérisé par le fait qu'**il consiste en la réalisation des étapes suivantes :

   - découpe et désossage des pièces de viande,
   - injection sous pression d'une solution de saumurage à base d'alcool de qualité alimentaire, contenant notamment des agents conservateurs, des agents antioxydants, des sucres, des polyphosphates, des aromates, du sel de table nitrité et éventuellement de l'eau,
   - poursuite de l'imprégnation de la solution de saumurage dans les pièces de viande par malaxage dans une baratte sous vide, mise en forme des pièces de viande dans des poches sous vide, cuisson et refroidissement.

7. Produit carné cuit obtenu selon l'une quelconque des revendications 1 à 6, **caractérisé par le fait qu'**il contient de l'alcool et qu'il est choisi dans le groupe comprenant le jambon ou l'épaule de porc, le jambon de volailles, de dinde ou de poulet, les rôtis cuits de porc, de dinde ou de dindonneau, ledit produit carné présentant des propriétés organoleptiques améliorées.

## Claims

1. Process for preparing cooked meat products incorporating a brining stage, **characterized in that** the brine water is replaced by food grade alcohol, the proportion ranging from 10 to 100%, preferably between 40 and 100% and still more preferably between 75 and 100%, to which the following have been notably added:

   - preservatives,
   - anti-oxidants,
   - sugars,
   - flavourings,
   - polyphosphates,
   - nitrite curing salt.

2. Process according to claim 1, **characterized in that** the alcohol is selected from the group consisting of wines and spirits or their mixtures.

3. Process according to one of the claims 1 or 2, **characterized in that** the meat products are selected from the group consisting notably of ham or pork shoulder, poultry ham, especially turkey or chicken, roast pork or turkey.

**4.** Process according to one of the claims 1 to 3, **characterized in that** the brining process is carried out by immersing the meat or, preferably, by injecting it and then kneading.

**5.** Process according to one of the claims 1 to 4, **characterized in that** 80 to 100g brine solution, or preferably 100 to 180g and ideally 120 to 160g, is used per kg of meat product being prepared.

**6.** Process according to one of the claims 1 to 5, **characterized in that** it consists of the following stages:

- pieces of meat are cut up and boned,
- brine solution made with food grade alcohol and containing notably preservatives, anti-oxidants, sugars, polyphosphates, flavourings, nitrite curing salt and possibly water is injected into the meat under pressure,
- the impregnation process is continued by mixing pieces of meat and brine solution in a vacuum churn, the pieces of meat then being formed in vacuum bags, cooked and cooled.

**7.** Cooked meat product obtained according to one of the claims 1 to 6, **characterized in that** it contains alcohol and is selected from the group comprising ham or pork shoulder, poultry, turkey or chicken ham, roast pork or turkey, the said meat product exhibiting improved organoleptic properties.

**Patentansprüche**

**1.** Verfahren zur Herstellung von gegarten Fleischprodukten, bei welchem ein Schritt des Einlegens in Salzlake stattfindet, **dadurch gekennzeichnet, dass** das Wasser der Salzlake durch Alkohol von Nahrungsmittelqualität in Anteilen von 10 bis 100%, vorzugsweise von 40 bis 100% und noch bevorzugter von 75 bis 100%, ersetzt wird und man dieser insbesondere folgendes zugibt:

- Konservierungsmittel,
- Antioxidantien,
- Zucker,
- Aromastoffe,
- Polyphosphate,
- Nitrittafelsalz.

**2.** Verfahren nach Anspruch 1, **dadurch gekennzeichnet, dass** der Alkohol aus der Gruppe ausgewählt wird, die Weine und Spirituosen oder ihre Mischungen umfasst.

**3.** Verfahren nach einem der Ansprüche 1 oder 2, **dadurch gekennzeichnet, dass** die Fleischprodukte aus der Gruppe ausgewählt werden, die insbesondere Schweineschinken oder -schulter, Geflügelschinken, insbesondere von Pute oder Huhn, gegarte Braten von Schwein, Pute oder junger Pute umfasst.

**4.** Verfahren nach einem der Ansprüche 1 bis 3, **dadurch gekennzeichnet, dass** das Einlegen in Salzlake durch Eintauchen oder vorzugsweise durch Einspritzen und darauffolgendes Kneten vorgenommen wird.

**5.** Verfahren nach einem der Ansprüche 1 bis 4, **dadurch gekennzeichnet, dass** die Salzlakelösung in einer Menge von 80 bis 100 g pro kg zu behandelndes Fleischprodukt, vorzugsweise von 100 bis 180 g und noch bevorzugter von 120 bis 160 g, verwendet wird.

**6.** Verfahren nach einem der Ansprüche 1 bis 5, **dadurch gekennzeichnet, dass** es in der Durchführung der folgenden Schritte besteht:

- Schneiden und Ablösen der Fleischstücke vom Knochen,
- Einspritzen unter Druck einer Salzlakelösung auf der Grundlage von Alkohol von Nahrungsmittelqualität, die insbesondere Konservierungsmittel, Antioxidationsmittel, Zucker, Polyphosphate, Aromastoffe, Nitrittafelsalz und ggf. Wasser enthält,
- weiteres Durchtränken der Fleischstücke mit der Salzlakelösung durch Kneten in einem Knetapparat unter Vakuum, Formung der Fleischstücke in Taschen unter Vakuum, Garen und Kühlen.

**7.** Gemäß einem der Ansprüche 1 bis 6 hergestelltes Fleischprodukt, **dadurch gekennzeichnet, dass** es Alkohol enthält und dass es aus der Gruppe ausgewählt ist, die Schweineschinken oder -schulter, Schinken von Geflügel, Pute oder Huhn, gegarte Braten von Schwein, Pute oder junger Pute umfasst, wobei dieses Fleischprodukt verbesserte organoleptische Eigenschaften besitzt.